# EUROPÄISCHE PATENTSCHRIFT

(11) **EP 1 447 640 B1**
(45) Veröffentlichungstag und Bekanntmachung des Hinweises auf die Patenterteilung: **05.12.2007**
(21) Anmeldenummer: 04001930.9
(22) Anmeldetag: 29.01.2004
(51) Int. Cl.: F42B 3/00, H01H 39/00, B23D 15/14

(54) **Pyromechanisches Trennelement**
Pyro-mechanical breaker
Disjoncteur pyromécanique

(30) Priorität: 19.08.2003 DE 10337958; 21.02.2003 DE 10307706; 04.02.2003 DE 10304528
(43) Veröffentlichungstag der Anmeldung: 18.08.2004
(73) Patentinhaber: Delphi Technologies, Inc., Troy, MI 48007 (US)
(72) Erfinder: Brede, Uwe, 90765 Fuerth (DE); Kordel, Gerhard, 90455 Nuernberg-Kornburg (DE); Knauss, Jürgen, 90587 Obermichelbach (DE); Meisinger, Reinhold, Prof. Dr., 90480 Nürnberg (DE)
(74) Vertreter: Manitz, Finsterwald & Partner GbR

(56) Entgegenhaltungen:
- EP-A- 0 563 947
- EP-A- 0 863 528
- DE-A- 19 616 994
- DE-A- 19 732 650
- DE-U- 8 027 885
- DE-U- 29 700 594
- US-A- 4 224 487
- US-A- 5 535 842
- US-B1- 6 556 119

## Beschreibung

Die Erfindung betrifft ein pyromechanisches Trennelement nach dem Oberbegriff des Anspruchs 1, wie es beispielsweise in der DE 197 32 650 A1 beschrieben ist.

Ein anderes elektrisches Sicherungselement, bei dem ein Stromleiter zerstört wird, wenn der darin fließende Strom einen Schwellwert überschreitet, ist in der EP 0 563 947 A1 beschrieben.

Derartige Trennelemente können z. B. zur Unterbrechung der Stromzufuhr im Bordnetz eines Kraftfahrzeuges verwendet werden. Bei einem Unfall werden diese Trennelemente ausgelöst, wodurch die Stromzufuhr unterbrochen wird und dadurch die Brandgefahr verringert ist.

Der Erfindung liegt die Aufgabe zu Grunde, ein Trennelement nach dem Oberbegriff des Anspruchs 1 so weiterzubilden, dass eine sichere Trennung des elektrischen Leiters auch bei einem geringeren pyrotechnisch erzeugten Energieaufwand erfolgen kann.

Erfindungsgemäß wird diese Aufgabe durch ein pyromechanisches Trennelement gemäß Anspruch 1 gelöst.

Die seitlichen Verrastzungen sind bevorzugt am zur pyrotechnischen Ladung gewandten Ende des Trennkolbens angeordnet.

Zur Verdrehsicherung des Trennkolbens und damit des Trennmeißels weist der Trennkolben auf seiner Außenfläche längslaufende Führungsrippen auf, die in entsprechende Führungsnuten im Gehäuse eingreifen.

Sinnvollerweise überragt der Trennmeißel im ausgelenkten Zustand die Biegezunge.

Bevorzugt besteht der Trennmeißel aus einem faserverstärkten Kunststoff.

In weiter vorteilhafter Ausgestaltung weist der Trennkolben weitere seitliche Verrastzungen auf, die im nicht ausgelenkten Zustand des Trennkolbens in entsprechende Formnuten im Gehäuse einrasten. Hierdurch ist eine Verdämmung des Trennkolbens bei der Auslösung erreicht, d. h. dass der Trennkolben erst bei einem höheren Druck in Bewegung gerät.

Zweckmäßigerweise sind die seitlichen Verrastzungen federnd ausgebildet.

Vorteilhafterweise ist im Trennkolben am zur pyrotechnischen Ladung gewandten Ende ein Rückhaltefilter aus vorzugsweise Drahtgestrick vorgesehen, das mögliche Verbrennungsrückstände der gezündeten pyrotechnischen Ladung absorbiert.

Die Erfindung wird nachfolgend an Hand von Figuren näher erläutert.

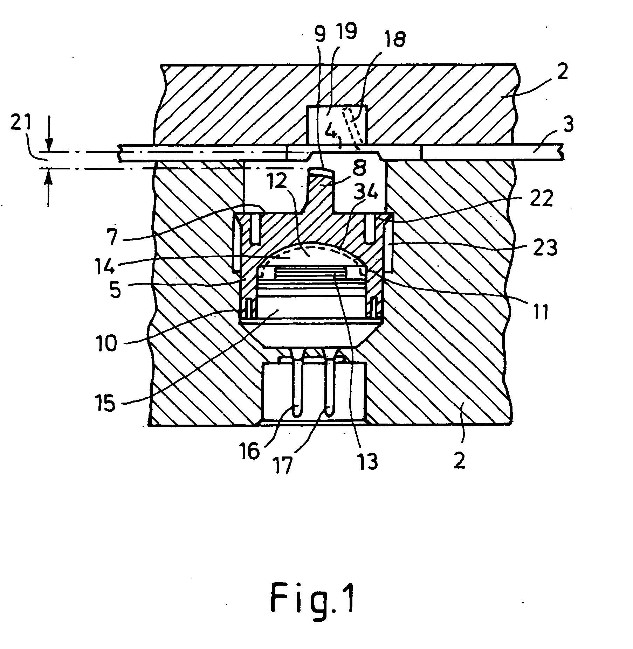

Ein Ausführungsbeispiel für ein erfindungsgemäßes pyromechanisches Trennelement ist in Figur 1 dargestellt. Es besteht im Wesentlichen aus einem massiven Gehäuse 2, geschnitten dargestellt, das einen elektrischen Leiter 3 umgibt, der die Form einer flachen Schiene hat und an einer vorgesehenen Trennstelle eine Querschnittsverringerung 4 aufweist. Der Querschnitt dieser Querschnittsverringerung 4, nachfolgend auch Trennstelle genannt, muss in Abstimmung auf den Werkstoff des Leiters so bemessen sein, dass er einerseits keinen zusätzlichen elektrischen Widerstand bewirkt und andererseits eine vollständige Durchtrennung mit Hilfe des Trennelements ermöglicht.

Als Leiterwerkstoffe werden Kupfer, Messing und gegebenenfalls Aluminium bevorzugt.

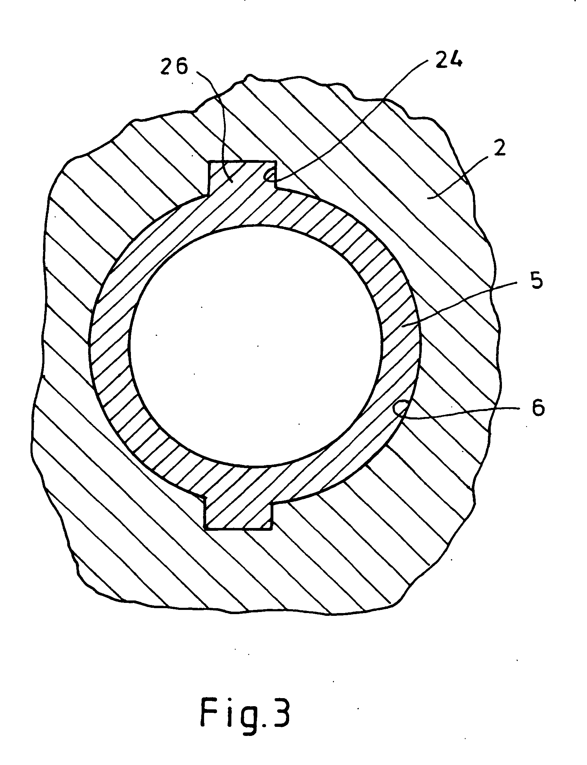

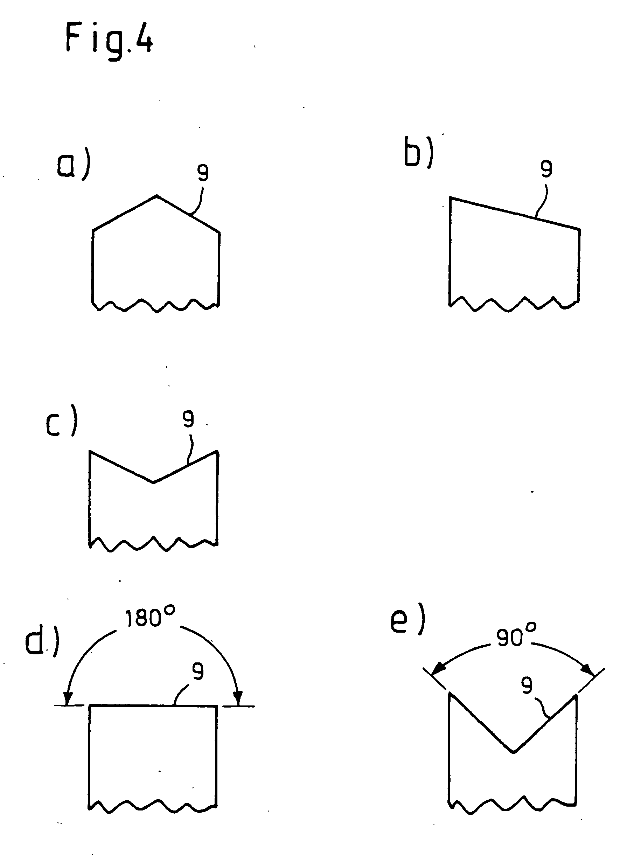

Die Trennung des elektrischen Leiters 3 erfolgt mit einem sogenannten Trennkolben 5. Der Trennkolben 5 wird in einer im Gehäuse 2 angeordneten Bohrung 6 (siehe Fig. 3) geführt. Die Bohrung 6 verläuft senkrecht auf den Leiter 3 zu und wird durch dessen Querschnittsverringerung 4 abgeschlossen. Der Trennkolben 5 trägt auf seiner der Trennstelle 4 des Leiters 3 zugewandten Stirnseite 7 einen Trennmeißel 8. Der Trennmeißel 8 weist eine Schneide 9 auf zum Zerstören der Trennstelle 4 im Leiter 3. Die Form der Schneide 9 muss auf den durchzutrennenden Werkstoff abgestimmt sein. Sie ist entweder V-förmig, spitz zulaufend oder schräg verlaufend geformt (siehe Fig. 4). Die angeführten Formen haben den Vorteil, dass die Schneide 9 nicht sofort mit der vollen Breite des Trennmeißels 8 auf die Trennstelle 4 auftrifft, sondern an zwei beziehungsweise einer Auftreffstelle beginnend in den Werkstoff eindringt. Bei einer V-förmigen Schneide wird die Trennkraft mit abnehmendem Spreizwinkel der beiden V-Schenkel zunehmend geringer.

Auf der der Trennstelle 4 abgewandten Seite, der Bodenseite 10 des Trennkolbens 5, befindet sich ein von der Kolbenwand 11 umschlossener Raum 12. Er enthält die Treibladung 13 zum Antrieb des Trennkolbens 5 und einen Leerraum 14, der zwischen der Bodenseite 10 und der Treibladung 13 angeordnet ist und bei der Zündung zum Aufbau des Antriebsdrucks dient.

Aus Fig. 1 ist ersichtlich, dass sich im Leerraum 14 des Trennkolbens 5 ein Rückhaltefilter 34 in Form beispielsweise eines Drahtgestrickes befinden kann, um die Verbrennungsrückstände der pyrotechnischen Antriebsladung 13 zu absorbieren.

Die Antriebsladung 13 kann auf dem Anzünder 15, in dem sich eine nicht näher beschriebene Initialladung befindet, liegen, oder sie ist bereits im Anzünder 15 integriert. Die Zündung kann, wie im vorliegenden Ausführungsbeispiel durch die zwei Anschlüsse 16 und 17 angedeutet, elektrisch erfolgen. Dazu sind die Anschlüsse 16 und 17 beispielsweise an den Steuerkreis von Sensoren angeschlossen, die bei einem Unfall eines Kraftfahrzeugs die Airbags auslösen. Es kann aber auch eine mechanische Auslösung erfolgen, beispielsweise mittels einer Zündnadel, die aufgrund sich verformender Karosserieteile in den Zündsatz getrieben wird.

Der Trennkolben 5 oder zumindest der Trennmeißel 8 müssen aus einem nicht leitenden Werkstoff bestehen, der erfindungsgemäß so ausgestaltet ist, den Werkstoff des elektrischen Leiters 3 zu durchtrennen. Geeignet sind Kunststoffe, die durch Zusätze oder Füllmittel gehärtet sind. In vorteilhafter Weise eignen sich auch keramische Werkstoffe, insbesondere in Zusammensetzungen, wie sie für Werkzeuge in der Metall verarbeitenden Industrie vorgesehen sind. Vorteilhaft sind solche keramischen Werkstoffe, die Stoßbelastungen ertragen können.

Wenn die Antriebsladung 13 über den Anzünder 15 gezündet wird, wird der Trennkolben 5 in Richtung auf die Trennstelle 4 des elektrischen Leiters 3 beschleunigt. Nach dem vom Trennkolben zurückgelegten Freiflugweg 21, trifft er mit dem Trennmeißel 8 auf die Trennstelle 4 des elektrischen Leiters 3. Die Schneide 9 durchtrennt den Leiter nur an einer Stelle und biegt ein zungenförmiges Teil 18 des Leiters 3 an der Stelle seines geringsten Querschnitts weg in eine eigens dafür vorgesehene Aussparung 19 des Gehäuses 2, wie mit der aufgebogen dargestellten Biegezunge 18 angedeutet wird. Dadurch wird der Stromfluss unterbrochen.

Durch diese erfindungsgemäße vorteilhafte Trennanordnung ist der pyrotechnisch erzeugte Energieaufwand geringer als bei den dem Stand der Technik entsprechenden, bekannten Stanzlösungen.

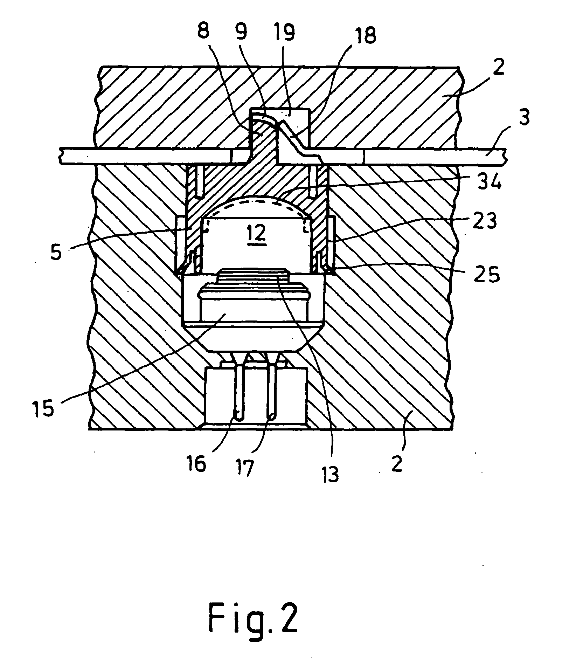

Beim Einsatz eines pyromechanischen Trennelements ist es wichtig, dass die Trennung des Leiters 3 und damit die Unterbrechung des Stromflusses aufrecht erhalten wird. Das wird am besten dadurch erreicht, wenn der Trennmeißel 8 nach dem Durchtrennen des Leiters 3 an der Trennstelle 4 gesichert an seinem erreichten Ort verbleibt und dadurch einen möglichen mechanischen Kontakt der getrennten Leiterenden verhindert. Erfindungsgemäß wird dies erreicht durch die Klemmwirkung der sich nach dem Trennvorgang ausgebildeten Biegezunge 18 (siehe Fig. 2).

Entsprechend der Erfindung wird die Positionierung des Trennmeißels 8 in Ruhelage dadurch fixiert, dass der Trennkolben 5 mit einer Einrasteinrichtung ausgestattet ist, wie sie in einem Ausführungsbeispiel in Figur 1 dargestellt ist. An der äußeren Wand des Trennkolbens 5 befindet sich beispielsweise ein nach außen weisendes Federelement bzw. Verrastzungen 22. In Ruhelage steht dieses Federelement einer Formnut 23 in der Bohrung 6 des Gehäuses 2 gegenüber. Es spreizt sich ab, dringt in die Formnut 23 ein und verhindert dadurch ein Herausrutschen aus seiner Ausgangsposition.

Eine weitere vorteilhafte Ausführung zur Fixierung des Trennkolbens 8 in Endlage (nach dem Trennvorgang) ist in Fig. 2 dargestellt.

Die Positionierung des Trennmeißels 8 in Endlage wird dadurch fixiert, dass der Trennkolben 5 mit einer weiteren Einrasteinrichtung ausgestattet ist, wie sie im Ausführungsbeispiel entspr. Figur 2 dargestellt ist. An der äußeren Wand des Trennkolbens 5 befindet sich ein weiteres nach außen weisendes Federelement bzw. Verrastzunge 25. In Endlage des Trennkolbens steht dieses Federelement 25 einer Nut 23 in der Bohrung 6 des Gehäuses 2 gegenüber. Es spreizt sich ab, dringt in die Nut 23 ein und verhindert dadurch ein Zurückrutschen aus seiner Endposition nach dem Trennvorgang.

Damit die Schneide 9 des Trennmeißels 8 die Trennstelle 4 im Leiter 3 an der vorgesehenen Stelle trifft, kann der Trennmeißel 5 gegen Verdrehen gesichert sein. Dazu kann mindestens eine Führungsnut 24 in der Bohrung 6 vorgesehen sein, in die eine Führungsrippe 26 auf der äußeren Wand des Trennkolbens 5 eingreift, wie in Figur 3 dargestellt.

Die pyrotechnische Ladung muss auf den zu durchtrennenden Werkstoff und den Querschnitt des Leiters abgestimmt sein, damit ein sicheres Durchtrennen möglich ist. Die aufzubringende Trennleistung ist abzustimmen auf die Bruchdehnungszahl des zu trennenden Werkstoffs, die Formgebung des Trennmeißels sowie dessen Werkstoffeigenschaften und die kinetische Energie, mit der der Trennmeißel auf den zu trennenden Werkstoff auftrifft. Bei spröden Werkstoffen ist beispielsweise ein kurzer, heftiger Schlag des Trennmeißels erforderlich, während bei zäheren Werkstoffen, beispielsweise bei Kupferlegierungen, der Druck auf den Trennmeißel länger andauern muss, weil beim Trennvorgang vor dem Trennen zunächst eine Werkstoffdehnung auftritt.

Fig. 4a zeigt einen Meißel mit einer spitz zulaufenden Schneide 9. Fig. 4b zeigt eine schräg zulaufende Schneide und Fig. 4c eine V-förmige Schneide 9. Fig. 4d zeigt einen Meißel mit einer V-förmigen Schneide 9 mit einem Winkel von 180° und Fig. 4e eine Schneide 9 V-förmig mit einem Winkel von 90°.

## Patentansprüche

1. Pyromechanisches Trennelement mit einem Gehäuse (2) in dem ein elektrischer Leiter (3) angeordnet ist, mit einem Trennkolben (5) mit Trennmeißel (8) zum Durchtrennen des elektrischen Leiters (3) und mit einer pyrotechnischen Ladung (13) zum Antrieb des Trennkolbens (5), wobei der Trennmeißel (8) den elektrischen Leiter (3) nach dem Durchtrennen umbiegt und dadurch eine Biegezunge (18) gebildet ist, die in einer den Leiter (3) unterbrechenden Weise vom Leiter (3) absteht, wobei der Trennmeißel (8) die Querschnittsverringerung (4) zuerst nur an einer Querseite durchtrennt und beim weiteren Vordringen zumindest teilweise die Längsseiten umbiegt, **dadurch gekennzeichnet,**
- **dass** der elektrische Leiter (3) in Längsrichtung eine Querschnittsverringerung (4) aufweist, die aus zwei Querseiten und zwei Längsseiten besteht,
- **dass** der Trennmeißel (8) beim weiteren Vordringen die so geschaffene Biegezunge (18) festklemmt, und
- **dass** der Trennkolben (5) seitliche Verrastzungen (25) aufweist, die im ausgelenkten Zustand des Trennkolbens (5) in vorgesehene Formnuten (23) des Gehäuses (2) einrasten und den Trennkolben (5) im ausgelenkten Zustand fixieren.

2. Trennelement nach Anspruch 1, **dadurch gekennzeichnet, dass** die seitlichen Verrastzungen (25) am zur pyrotechnischen Ladung (13) gewandten Ende des Trennkolbens (5) angeordnet sind.

3. Trennelement nach Anspruch 1 oder 2, **dadurch gekennzeichnet, dass** der Trennkolben (5) auf seiner Außenfläche längslaufende Führungsrippen (26) aufweist, die in entsprechende Führungsnuten (24) im Gehäuse (2) eingreifen.

4. Trennelement nach einem der Ansprüche 1 bis 3, **dadurch gekennzeichnet, dass** der Trennmeißel (8) im ausgelenkten Zustand die Biegezunge (18) überragt.

5. Trennelement nach einem der Ansprüche 1 bis 4, **dadurch gekennzeichnet, dass** der Trennmeißel (8) aus faserverstärktem Kunststoff besteht.

6. Trennelement nach einem der Ansprüche 1 bis 5, **dadurch gekennzeichnet, dass** der Trennkolben (5) seitliche Verrastzungen (22) aufweist, die im nicht ausgelenkten Zustand des Trennkolbens (5) in entsprechende Formnuten (23) des Gehäuses (2) einrasten.

7. Trennelement nach einem der Ansprüche 1 bis 6, **dadurch gekennzeichnet, dass** die seitlichen Verrastzungen (22, 25) federnd ausgebildet sind.

8. Trennelement nach einem der Ansprüche 1 bis 7, **dadurch gekennzeichnet, dass** im Trennkolben (5) am zur pyrotechnischen Ladung (13) gewandten Ende ein Rückhaltefilter (34) aus vorzugsweise Drahtgestrick vorgesehen ist, das mögliche Verbrennungsrückstände der gezündeten pyrotechnischen Ladung (13) absorbiert.

## Claims

1. Pyromechanical cutting element having a housing (2) in which an electrical conductor (3) is arranged, having a cutting plunger (5) with a cutting chisel (8) to cut through the electrical conductor (3), and having a pyrotechnic charge (13) to drive the cutting plunger (5), with the cutting chisel (8) bending over the electrical conductor (3) after cutting through and a bending tongue (18) thereby being formed that projects from the conductor (3) in a manner interrupting the conductor (3), wherein the cutting chisel (8) first cuts through the cross-sectional area reduction (4) only on one transverse side and, on further advancement, bends over the longitudinal sides at least in part,
**characterised in that**
- the electrical conductor (3) has a cross-sectional area reduction (4) in the longitudinal direction consisting of two transverse sides and two longitudinal sides,
- on further advancement, the cutting chisel (8) fixedly clamps the bending tongue (18) thus created; and
- the cutting plunger (5) has lateral latching tongues (25) which latch into shaped grooves (23) of the housing (2) that are provided in the deflected state of the cutting plunger (5) and fix the cutting plunger (5) in the deflected state.

2. Cutting element according to claim 1, **characterised in that** the lateral latching tongues (25) are arranged at that end of the cutting plunger (5) facing the pyrotechnic charge (13).

3. Cutting element according to claim 1 or claim 2, **characterised in that** the cutting plunger (5) has longitudinally extending guide ribs (26) on its outer face that engage into corresponding guide grooves (24) in the housing (2).

4. Cutting element according to any one of the claims 1 to 3, **characterised in that** the cutting chisel (8) projects beyond the bending tongue (18) in the deflected state.

5. Cutting element according to any one of the claims 1 to 4, **characterised in that** the cutting chisel (8) is made from fibre-reinforced plastic.

6. Cutting element according to any one of the claims 1 to 5, **characterised in that** the cutting plunger (5) has lateral latching tongues (22) which latch into corresponding shaped grooves (23) of the housing (2) in the non-deflected state of the cutting plunger (5).

7. Cutting element according to any one of the claims 1 to 6, **characterised in that** the lateral latching tongues (22, 25) are formed to be resilient.

8. Cutting element according to any one of the claims 1 to 7, **characterised in that** a retaining filter (34) preferably made of wire mesh is provided in the cutting plunger (5) at the end facing the pyrotechnic charge (13) and absorbs possible residues of combustion of the ignited pyrotechnic charge (13).

## Revendications

1. Disjoncteur pyromécanique comportant un boîtier (2), dans lequel est agencé un conducteur électrique (3), comportant un piston de coupure (5) avec un burin de sectionnement (8) destiné à sectionner le conducteur électrique (3), et comportant une charge pyrotechnique (13) destinée à actionner le piston de coupure (5), le burin de sectionnement (8) repliant le conducteur électrique (3) après le sectionnement et formant ainsi une languette flexible (18), qui est en saillie sur le conducteur (3) de manière à interrompre le conducteur (3), sachant que le burin de sectionnement (8) sectionne le rétrécissement de section (4) d'abord uniquement sur un côté transversal et, en continuant à avancer, replie au moins partiellement les côtés longitudinaux, **caractérisé**
- **en ce que** le conducteur électrique (3) comporte un rétrécissement de section (4) dans le sens longitudinal, lequel est formé par deux côtés transversaux et deux côtés longitudinaux,
- **en ce que** le burin de sectionnement (8), en continuant à avancer, bloque les languettes flexibles (18) ainsi formées, et
- **en ce que** le piston de coupure (5) comporte des languettes de blocage (25) latérales qui, dans la position déviée du piston de coupure (5), s'engagent dans des rainures façonnées (23) prévues dans le boîtier (2) et immobilisent le piston de coupure (5) dans la position déviée.

2. Disjoncteur selon la revendication 1, **caractérisé en ce que** les languettes de blocage (25) latérales sont agencées de préférence sur l'extrémité du piston de coupure (5), orientée vers la charge pyrotechnique (13).

3. Disjoncteur selon la revendication 1 ou 2, **caractérisé en ce que** le piston de coupure (5) comporte, sur sa face extérieure, des nervures de guidage (26) longitudinales, qui s'engagent dans des rainures de guidage (24) correspondantes, ménagées dans le boîtier (2).

4. Disjoncteur selon l'une quelconque des revendications 1 à 3, **caractérisé en ce que** le burin de sectionnement (8) dans la position déviée s'engage au-delà de la languette flexible (18).

5. Disjoncteur selon l'une quelconque des revendications 1 à 4, **caractérisé en ce que** le burin de sectionnement (8) est réalisé dans une matière plastique renforcée par des fibres.

6. Disjoncteur selon l'une quelconque des revendications 1 à 5, **caractérisé en ce que** le piston de coupure (5) comporte des languettes de blocage (22) latérales qui, dans la position non déviée du piston de coupure (5), s'engagent dans des rainures façonnées (23) correspondantes du boîtier (2).

7. Disjoncteur selon l'une quelconque des revendications 1 à 6, **caractérisé en ce que** les languettes de blocage (22, 25) latérales sont élastiques.

8. Disjoncteur selon l'une quelconque des revendications 1 à 7, **caractérisé en ce qu'**il est prévu sur le piston de coupure (5), au niveau de l'extrémité orientée vers la charge pyrotechnique (13), un filtre de retenue (34), qui est réalisé de préférence dans un treillis de fil métallique, qui absorbe d'éventuels résidus de combustion de la charge pyrotechnique (13) mise à feu.
